# FASCICULE DE BREVET EUROPEEN

(11) **EP 3 081 484 B1**
(45) Date de publication et mention de la délivrance du brevet: **16.08.2017**
(21) Numéro de dépôt: 16162517.3
(22) Date de dépôt: 29.03.2016
(51) Int. Cl.: B64C 27/56, B64C 13/08

(54) **SYSTEME DE COMMANDE D'UN ROTOR DE GIRAVION, GIRAVION EQUIPE D'UN TEL SYSTEME ET METHODE DE COMMANDE ASSOCIEE**
STEUERSYSTEM EINES ROTORS EINES DREHFLÜGELFLUGZEUGS, MIT EINEM SOLCHEN SYSTEM AUSGESTATTETES DREHFLÜGELFLUGZEUG UND ENTSPRECHENDE STEUERMETHODE
A SYSTEM FOR CONTROLLING A ROTORCRAFT ROTOR, A ROTORCRAFT FITTED WITH SUCH A SYSTEM, AND AN ASSOCIATED CONTROL METHOD

(30) Priorité: 13.04.2015 FR 1500756
(43) Date de publication de la demande: 19.10.2016
(73) Titulaire: Airbus Helicopters, 13725 Marignane Cedex (FR)
(72) Inventeur: VALLART, Jean-Baptiste, 13100 AIX EN PROVENCE (FR); BYZERY, Roméo, 13003 MARSEILLE (FR)
(74) Mandataire: GPI & Associés

(56) Documents cités:
- EP-A1- 2 226 531
- WO-A1-01/87706
- US-A1- 2004 010 354

## Description

La présente invention concerne un système de commande d'un rotor de giravion. Un tel système de commande est en outre adapté pour permettre de modifier l'orientation angulaire, c'est-à-dire le pas collectif et/ou le pas cyclique, des pales d'un rotor principal ou d'un rotor arrière ou encore pour permettre de modifier l'inclinaison du plan du rotor défini à chaque instant par le mouvement de rotation des extrémités libres des pales du rotor.

L'invention concerne également un giravion équipé d'un tel système de commande d'un rotor et une méthode de commande d'un rotor au moyen d'un organe de commande. Par ailleurs, pour la suite de la présente demande, on entend désigner par organe de commande tout dispositif de commande apte à être manoeuvré par un pilote ou automatiquement que ce soit dans un cockpit de pilotage ou à l'extérieur du giravion lorsque celui-ci n'embarque pas de pilote. Un tel organe de commande peut ainsi se présenter sous diverses formes et notamment, d'une part, celle d'un levier de pas cyclique ou d'un manche de pas collectif, d'un "mini-manche", également désigné en langue anglaise par le terme de "joystick", de pas cyclique ou de pas collectif, ou encore d'autre part, celle d'un palonnier permettant de modifier l'angle de pas des pales d'un rotor arrière de giravion.

De façon générale, les systèmes de commande comportent des organes de commande présentant des grands bras de levier et/ou des débattements importants entre deux butées physiques de la course de déplacement d'un organe de commande. En effet, dans certains cas, la course de l'extrémité libre d'un manche conventionnel peut être très importante et par exemple supérieure à plusieurs dizaines de centimètres.

Par ailleurs, avec de tels organes de commande conventionnels, on utilise généralement une seule loi de commande de pilotage proportionnelle en position. Dans ces conditions, une position du manche correspond par exemple à une position invariante du plan rotor du giravion.

Un tel mode de fonctionnement est notamment mis en oeuvre dans le cas d'un système de commande mécanique où l'organe de commande et le rotor sont liés mécaniquement par une pluralité de bielles de renvois, de biellettes et de plateaux.

Dans ce cas, le débattement important d'un manche par exemple permet de couvrir toute la plage de commande du rotor et de piloter le giravion avec une sensibilité optimale. Pour chaque déplacement du manche, on effectue un déplacement proportionné du rotor et la réponse du giravion qui s'en suit est contrôlable.

De plus, le débattement important du manche permet également de fournir un bras de levier suffisant pour contrer les efforts de commande importants.

Cependant, même avec un débattement important le maintien du manche dans une position déterminée peut se révéler complexe à réaliser ou inconfortable. Pour cette raison, un dispositif d'assistance, généralement appelé sous le terme de "boitier de trim", permet au pilote de placer le manche dans une certaine position et de laisser des moyens aptes à fournir un effort de compensation maintenir le manche dans cette position. Dans le langage spécifique du pilotage de giravion, pour désigner cette fonction on utilise alors souvent l'expression "ancrer le manche" ou encore "annuler les efforts" (sous entendu sur le manche).

Ainsi, pour limiter les efforts dans l'organe de commande, il a ensuite été développé des commandes électriques ou optiques, telles que notamment décrites dans les documents WO 01/87706 et US 2004/0010354 pour piloter les différents mouvements d'un rotor de giravion et plus généralement par le document EP 2 226 531 pour contrôler l'avance d'un engin. Un calculateur reçoit alors des informations relatives au positionnement du manche et commande ensuite une servocommande en proportion. Un tel système de commande électrique ou optique est donc avantageux en ce qu'il permet de désaccoupler mécaniquement l'organe de commande et le rotor qu'il pilote.

Cependant dans ce cas, pour couvrir toute la plage de mouvement du rotor, le débattement des organes de commande reste nécessairement très important. Il est notamment équivalent à celui d'un organe de commande mécanique. Une telle amplitude de débattement constitue ainsi une contrainte importante dans la conception du poste de pilotage et sur l'ergonomie résultante. Ainsi, les organes de commande à grands débattements ne permettent pas de garantir un confort optimal du poste de pilotage.

De plus, la loi de commande de la servocommande agissant sur le rotor au sol est unique et consiste toujours en une loi directe en position, c'est-à-dire qu'à chaque position de l'organe de commande correspond une position du rotor. Or, une telle loi de commande n'est pas adaptée pour permettre d'utiliser des organes de commande à faible débattement et pour couvrir en même temps toute la plage de mouvement du rotor.

La présente invention a alors pour objet de proposer un système de commande permettant de s'affranchir des limitations mentionnées ci-dessus. Ce système de commande permet en outre de réduire sensiblement le débattement d'un organe de commande d'un rotor de giravion tout en conservant une plage de commande complète du rotor et en garantissant une sensibilité optimale de pilotage. De plus, le système de commande conforme à l'invention permet une nouvelle disposition d'un cockpit de pilotage de giravion et garantit ainsi une ergonomie optimale de la position de pilotage.

L'invention concerne donc un système de commande d'un rotor d'un giravion, un tel système de commande comportant au moins un organe de commande apte à piloter le rotor.

Selon l'invention, le système de commande est remarquable en ce qu'il comporte :
- des moyens de sélection pour définir, entre deux butées physiques correspondant aux limites de déplacement de l'organe de commande, au moins deux plages disjointes de positions de l'organe de commande, une première plage de positions étant définie entre au moins deux premières valeurs limites autour d'une position d'effort nul de l'organe de commande et au moins une seconde plage de positions étant définie entre au moins une desdites au moins deux premières valeurs limites et au moins une seconde valeur limite,
- des moyens de commande pour affecter une première loi de commande à la première plage de positions de l'organe de commande et une seconde loi de commande à la seconde plage de positions de l'organe de commande, les première et seconde lois de commande étant choisies distinctes l'une de l'autre.

Autrement dit, les moyens de sélections permettent de définir au moins deux plages de valeurs disjointes correspondant à des positions différentes de l'organe de commande. Les première et seconde plages de positions peuvent par ailleurs correspondre à un déplacement angulaire de l'extrémité libre de l'organe de commande autour d'au moins un axe de rotation.

Dans le cas d'un mouvement alternatif de va-et-vient en rotation de l'organe de commande, tel que par exemple une commande de pas collectif ou des pédales de palonnier, les premières valeurs limites sont donc au nombre de deux et constituent les positions extrémales de la course de l'organe de commande sur la première plage de positions.

Par ailleurs, dans le cas d'un mouvement de rotation selon deux degrés de liberté de l'organe de commande par rapport à un socle, les premières et les secondes valeurs limites sont respectivement chacune supérieures au chiffre deux. Ces valeurs limites forment alors des portions de cônes en trois dimensions. L'organe de commande se présente alors avantageusement sous la forme d'une commande de pas cyclique des pales du giravion.

Les moyens de sélection permettent ainsi de modifier les deux plages de positions en faisant varier les positions des premières et secondes valeurs limites. De cette manière, on adapte le système de commande du rotor aux performances du giravion dans le but d'obtenir des qualités de vol satisfaisantes.

Les moyens de commande permettent quant à eux de d'affecter des lois de commande distinctes aux deux plages de positions de l'organe de commande. Ainsi, en fonction du positionnement de l'organe de commande entre les deux butées physiques, on pilote le rotor selon une première ou une seconde loi de commande.

Avantageusement, le système de commande peut comporter des moyens de contrôle permettant d'identifier un état posé du giravion sur un support.

Ainsi, le système de commande est apte à activer une au moins des première et seconde lois de commande lorsqu'un état posé du giravion est détecté par les moyens de contrôle.

En outre, de tels moyens de contrôle permettant d'identifier un état posé peuvent comporter au moins un capteur d'effort pour identifier au moins une force de réaction du sol sur au moins un train d'atterrissage du giravion.

Dans ce cas, le système de commande est apte à être activé lors d'une phase de pilotage correspondant à un état posé du giravion. Il peut alors permettre, en fonction de la position de l'organe de commande dans la première ou seconde plage de positions, de piloter le giravion selon l'une ou l'autre des deux lois de commande.

Par ailleurs, la première loi de commande étant de type linéaire en position, chaque position de l'organe de commande dans la première plage de positions peut correspondre à une position d'un plan du rotor.

En d'autres termes, dans la première loi de commande la commande pilote directement le positionnement du rotor en fonction de l'organe de commande. Un même écart entre la position courante de l'organe de commande et la position d'effort nul correspond ainsi invariablement à un écart entre la position courante du plan rotor et une position de référence de celui-ci.

Il est à noter que l'on entend par "plan du rotor" le plan décrit par les extrémités des pales du rotor. Un tel plan est également défini et agencé perpendiculairement par rapport à un axe de basculement d'un cône rotor. Ce cône correspond quant à lui à la trajectoire décrite par les pales du rotor lors de sa rotation.

En pratique, la seconde loi étant de type linéaire en vitesse, chaque position de l'organe de commande dans la seconde plage de positions peut correspondre à une vitesse d'inclinaison du plan du rotor. En outre, l'écart entre la position courante de l'organe de commande et la première limite définissant l'une des bornes de la seconde plage de positions correspond ainsi à une vitesse d'inclinaison ou de basculement du plan du rotor. Un tel écart est alors considéré en valeur absolue et est par conséquent intrinsèquement positif. Cet écart est alors associé à une vitesse d'inclinaison du plan rotor qui peut être, quant à elle, positive ou négative suivant le sens de déplacement de l'organe de commande par rapport à la position d'effort nul. Par ailleurs, il est à noter que la vitesse d'inclinaison du rotor correspond à la dérivée temporelle de la position du plan rotor.

Ainsi, la seconde loi de commande pilote la vitesse d'inclinaison du plan rotor par rapport à un plan d'entraînement correspondant à un plan perpendiculaire à un arbre rotor. Une telle seconde loi de commande est donc particulièrement adaptée pour atteindre l'ensemble de la plage de commande avec des déflexions faibles de l'organe de commande.

En effet, selon un mode de réalisation particulier, la seconde valeur limite peut être confondue avec une des deux butées physiques de l'organe de commande.

Dans ce cas, le système de commande permet de sélectionner uniquement deux plages de positions. De plus, la seconde plage de postions s'étend entre la première plage de positions et une butée physique de l'organe de commande.

Avantageusement, la seconde plage de positions de l'organe de commande peut comporter deux portions de plage, les deux portions de plage étant définies chacune entre une des premières valeurs limites de la première plage et une seconde valeur limite, les deux portions de la seconde plage de positions étant agencées respectivement de part et d'autre de la première plage de positions de l'organe de commande.

Autrement dit, au-delà des deux premières valeurs limites, correspondant à deux sens de déplacement de l'organe de commande, il existe une portion de la seconde plage de positions. La seconde plage de positions correspond ainsi à des positions sensiblement éloignées de la position d'effort nul de l'organe de commande selon deux sens opposés.

Selon un mode de réalisation avantageux, le système de commande peut comporter un moyen de réglage apte à modifier une position de référence du plan du rotor par rapport à un plan d'entraînement, une telle position de référence correspondant à l'inclinaison du rotor lorsque l'organe de commande se trouve dans la position d'effort nul.

De cette manière, le pilote peut changer la position de référence du rotor avec une grande sensibilité sans modifier le positionnement à proprement parler de l'organe de commande. Généralement, un tel moyen de réglage se présente sous la forme d'une petite protubérance mobile en rotation selon deux degrés de liberté et agencée à proximité de l'extrémité libre du manche. Un tel moyen de réglage est par ailleurs avantageusement actionné par le pilote à l'aide du pouce de la main saisissant l'organe de commande.

En pratique, l'organe de commande peut comporter une excroissance de longueur inférieure à 30cm entre une extrémité libre de l'excroissance et une articulation conférant à l'excroissance au moins un degré de liberté en rotation par rapport à un socle.

En effet une telle longueur de l'excroissance est tout à fait optimale pour permettre un positionnement ergonomique des organes de commande dans le cockpit de pilotage. De plus, une telle longueur permet de garantir une bonne sensibilité de pilotage avec un débattement suffisant de l'excroissance selon au moins deux sens opposés.

Par ailleurs et selon un mode de réalisation particulier, l'articulation peut conférer à l'excroissance deux degrés de liberté en rotation par rapport au socle et les au moins deux plages disjointes de positions décrites par l'excroissance peuvent être de forme conique avec des angles différents, les premières valeurs limites formant un angle du premier cône de la première plage et les secondes valeurs limites formant un angle extérieur du second cône creux formant la seconde plage.

En d'autres termes, l'excroissance peut former un organe de commande tel un manche ou mini-manche de commande de pas cyclique du giravion. Le manche est dans ce cas apte à pivoter autour de deux axes perpendiculaires entre eux et respectivement perpendiculaires à une direction longitudinale du manche formant un axe de révolution pour les premier et second cônes décrits par le manche. La première plage de positions du manche constitue donc un premier cône centré autour d'une position médiane. La seconde plage de positions du manche forme quant à elle un cône creux de même sommet que le cône de la première plage de positions mais en étant agencé exclusivement à l'extérieur de la première plage de positions. Autrement dit, le creux de la seconde plage de positions est ainsi formé par la première plage de positions du manche de pas cyclique.

L'invention concerne également un giravion remarquable en ce qu'il comporte un système de commande tel que précédemment décrit.

En effet, l'invention peut également se rapporter à un giravion dans lequel un système de commande permet notamment d'affecter une première loi de commande à une première plage de positions de l'organe de commande et une seconde loi de commande à une seconde plage de positions de l'organe de commande.

La présente invention a aussi pour objet une méthode de commande d'un rotor d'un giravion par un organe de commande.

Une telle méthode de commande est remarquable en ce qu'elle comporte des étapes consistant à :
- définir au moins deux plages distinctes de positions dudit organe de commande, une première plage de positions étant définie entre deux premières valeurs limites autour d'une position d'effort nul de l'organe de commande et une seconde plage de positions étant définie entre au moins une desdites deux premières valeurs limites et au moins une seconde valeur limite,
- affecter une première loi de commande à ladite première plage de positions dudit organe de commande et une seconde loi de commande à ladite seconde plage de positions dudit organe de commande, lesdites première et seconde lois de commande étant choisies distinctes l'une de l'autre.

Autrement dit, la méthode conforme à l'invention permet de distinguer différentes plages de positions de l'organe de commande pour ensuite affecter différentes lois de commande à chacune de ces plages. On définit ainsi une première plage de positions entre au moins deux premières valeurs limites et une seconde plage de position entre une des deux premières valeurs limites et une seconde valeur limite.

En outre, de telles plages de postions sont disjointes l'une de l'autre de manière à ce qu'il n'y ait aucun recouvrement possible entre les deux.

Avantageusement, la méthode peut comporter une étape consistant à identifier un état posé du giravion sur un support.

Ainsi, selon cette méthode, les lois de commande du rotor peuvent être adaptées en fonction d'un état posé ou en vol du giravion.

Par ailleurs selon un exemple particulier de réalisation, les lois de commande utilisées en vol pour piloter le giravion peuvent être désactivées lorsque l'état posé du giravion est identifié.

Selon un mode de réalisation particulier, la première loi de commande étant de type linéaire en position, à chaque position de l'organe de commande dans la première plage de positions on peut faire correspondre une position du plan du rotor.

En d'autres termes, la première loi de commande permet de contrôler les positions angulaires du plan décrit par les extrémités des pales du rotor par rapport à un plan d'entraînement perpendiculaire à l'arbre du rotor. En outre, avec cette première loi de commande, on pilote l'aéronef avec comme stratégie un objectif à atteindre en fonction de la position du rotor.

Par ailleurs, la seconde loi étant de type linéaire en vitesse, à chaque position de l'organe de commande dans la seconde plage de positions on peut faire correspondre une vitesse d'inclinaison d'un plan du rotor.

Dans ce cas, la seconde loi de commande permet de contrôler la vitesse angulaire de basculement du plan décrit par les extrémités des pales du rotor par rapport à un plan d'entraînement perpendiculaire à l'arbre du rotor. En outre avec cette seconde loi de commande, on pilote l'aéronef avec comme stratégie un objectif à atteindre en fonction de la vitesse de basculement du plan du rotor.

En pratique, on peut choisir la seconde valeur limite de manière à ce qu'elle soit confondue avec une butée physique de l'organe de commande.

Autrement dit, la seconde plage de positions s'étend entre une des premières valeurs limites et une butée physique de l'organe de commande. Ainsi, la méthode conforme à l'invention permet de définir deux plages de positions de l'organe de commande.

Avantageusement, on peut définir deux secondes valeurs limites pour la seconde plage de positions de l'organe de commande et la seconde plage de positions de l'organe de commande peut être formée par deux portions de plage, les deux portions de plage étant agencées respectivement de part et d'autre de la première plage de positions de l'organe de commande.

Dans ce cas, la méthode consiste à définir la seconde plage de positions dans deux sens opposés d'une même direction. La première plage de positions constitue une plage centrale entre les deux portions de la seconde plage de positions.

L'invention et ses avantages apparaîtront avec plus de détails dans le cadre de la description qui suit avec des exemples donnés à titre illustratif en référence aux figures annexées qui représentent :
- la figure 1, une vue schématique d'un système de commande comportant un organe de commande selon un premier mode de réalisation, conformément à l'invention,
- la figure 2, une vue de coté d'un organe de commande selon un premier mode de réalisation, conformément à l'invention,
- les figures 3 et 4, des schémas illustrant différentes représentations graphiques de plages de positions correspondant à un organe de commande conforme au premier mode de réalisation de la figure 2,
- la figure 5, une vue en perspective d'un organe de commande selon un second mode de réalisation, conformément à l'invention,
- les figures 6 et 7, des schémas illustrant différentes représentations graphiques de plages de positions correspondant à un organe de commande conforme au second mode de réalisation de la figure 5.

Comme déjà évoqué précédemment, l'invention se rapporte à un système de commande d'un rotor de giravion.

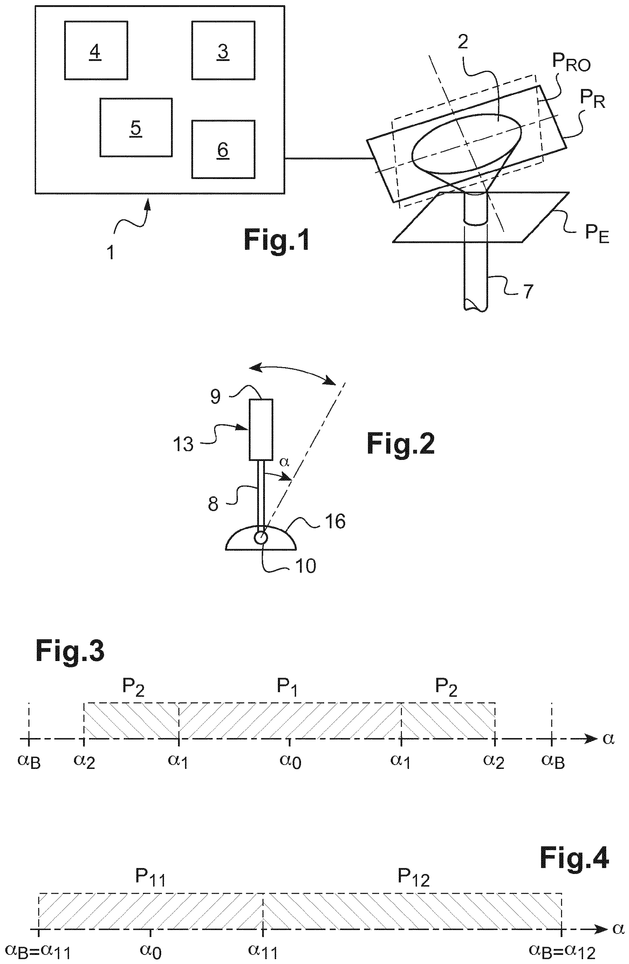

Tel que représenté la figure 1, un tel système de commande 1 comporte au moins un organe de commande 3 qui peut se présenter sous diverses formes et notamment celles d'un manche, d'un mini-manche, d'un joystick ou d'un palonnier. Un tel organe de commande 3 permet ainsi de piloter le pas collectif et/ou le pas cyclique des pales d'un rotor principal et/ou d'un rotor arrière de giravion. Par la suite, pour simplifier la description, on parle ainsi simplement d'un rotor 2 sans limitation à l'un ou l'autre de ces exemples de réalisation.

Par ailleurs, un tel système de commande 1 comporte également des moyens de sélection 4 permettant de définir des plages de positions disjointes pour l'organe de commande 3. Une première plage de positions inclut généralement une position d'effort nul de l'organe de commande dans laquelle les efforts sur l'organe de commande 3 sont faibles voire nuls. Une seconde plage de positions est quant à elle éloignée de cette position d'effort nul de l'organe de commande et se trouve à proximité ou inclut une butée physique de l'organe de commande 3.

En outre, le système de commande 1 comporte des moyens de commande 5 aptes à affecter des lois de commande distinctes l'une de l'autre à chacune des deux plages de positions de l'organe de commande 3.

Enfin, le système de commande 1 comporte des moyens de contrôle 6 permettant d'identifier un état posé du giravion. De tels moyens de contrôle intègrent généralement des capteurs aptes à identifier l'effort résultant du sol sur un train d'atterrissage du giravion. A titre d'exemple, pour la gamme de giravions commercialisés par le demandeur, un tel état posé du giravion correspond ainsi à un effort mesuré de plusieurs milliers de newtons.

Tel que représenté, un tel système de commande 1 permet ainsi, par exemple, de modifier un angle de basculement d'un plan P_{R} du rotor 2 par rapport à un plan P_{E} d'entraînement perpendiculaire à un arbre rotor 7. Le plan P_{R} du rotor 2 est agencé dans une position de référence P_{R0} et lorsque le pilote actionne l'organe de commande 3 cela peut provoquer alors un basculement du rotor 2 permettant au giravion de changer de direction et/ou de modifier sa vitesse de déplacement.

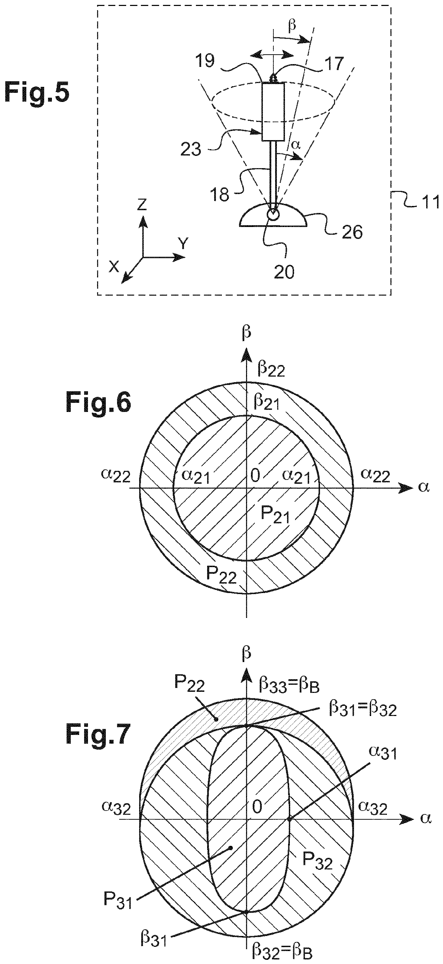

Tel que représenté à la figure 5, selon un second mode de réalisation, l'organe de commande 3 peut se présenter sous la forme d'un manche ou d'un mini-manche de commande de pas cyclique des pales du rotor.

Cependant, selon un premier mode de réalisation tel que représenté à la figure 2, l'organe de commande 13 peut être apte à commander le pas collectif d'un rotor. En effet dans ce cas, l'organe de commande 13 comporte une articulation 10 permettant de fournir un degré de liberté en rotation d'une excroissance 8 par rapport à un socle 16. Une telle articulation 10 permet ainsi à une extrémité libre 9 de l'excroissance 8 de décrire un mouvement de rotation d'angle α par rapport à une position d'effort nul de l'organe de commande 13 sensiblement perpendiculaire au plan avec lequel le socle 16 est solidaire.

Selon le premier mode de réalisation, l'excroissance 8 peut former un levier de pas collectif d'un rotor. Dans ce cas, l'extrémité libre 9 de l'excroissance 8 peut donc se déplacer selon les deux sens opposés d'une même direction.

Tel que représenté schématiquement à la figure 3, les positions de l'organe de commande 13 peuvent donc correspondre aux valeurs de l'angle α représentées en abscisse sur un axe horizontal des variations angulaires de l'organe de commande 13 par rapport au socle 16. Ainsi, tel que représenté, on peut alors définir sur l'ensemble de la course de l'organe de commande 13 deux plages de positions P₁ et P₂ distinctes l'une de l'autre, c'est à dire sans chevauchement.

La première plage P₁ est alors bornée par deux premières valeurs limites α₁ et elle inclue une position d'effort nul α₀ de l'organe de commande 13. La seconde plage P₂ est quant elle, dans cet exemple de réalisation, formée par deux portions de plage agencées de part et d'autre de la première plage P₁. Chaque portion de la seconde plage P₂ est alors bornée entre une première valeur limite α₁ et une seconde valeur limite α₂. Tel que représenté, l'organe de commande 13 comporte également deux butées physiques de positions α_{B} qui peuvent être, telles que représentées, non confondues avec l'une ou l'autre des première et seconde valeurs limites.

En revanche, selon un second mode de réalisation tel que représenté à la figure 4, il est également envisagé de faire correspondre les butées physiques de l'organe de commande 13 avec les première et seconde valeurs limites de chaque plage de positions.

En effet, l'une des deux premières valeurs limites α₁₁ de la première plage P₁₁ de positions peut correspondre avec l'une des deux butées physiques de position α_{B}. De même, la seconde valeur limite α₁₂ de la seconde plage P₁₂ de positions peut correspondre avec l'autre butée physique de position α_{B}.

Par ailleurs, dans ce cas, la seconde plage P₁₂ est monolithique, c'est-à-dire qu'elle n'est pas divisée en plusieurs portions disposées de part et d'autre de la première plage P₁₁ intégrant une position d'effort nul α₀ de l'organe de commande 13.

Comme déjà évoqué précédemment et tel que représenté à la figure 5, le système de commande 11 peut comporter un organe de commande 23 permettant de piloter le pas cyclique des pales d'un rotor de giravion. Un tel organe de commande 23 comporte alors une excroissance 18 mobile en rotation par rapport à un socle 26 selon deux degrés de liberté. Une telle excroissance 18 forme ainsi un manche ou mini-manche de commande du pas cyclique des pales d'un rotor.

Les axes de rotation de l'articulation 20 sont ainsi inscrits dans un plan xOy et sont perpendiculaires entre eux. Une telle excroissance 18 est ainsi libre de pivoter selon deux angles α et β représentatif des différentes positions de l'organe de commande 23 et des trajectoires d'une extrémité libre 19 d'excroissance 18. Dans ce cas, les positions de l'organe de commande 23 peuvent alors être définies par les coordonnées (α, β). Par conséquent, une représentation graphique des positions de l'organe de commande 23 peut, comme représenté aux figures 6 et 7, consister en des surfaces avec un axe d'abscisse représentatif des variations angulaires α de l'organe de commande et avec un axe d'ordonnée représentatif des variations angulaires β de l'organe de commande.

Dans ce cas, les valeurs limites des postions de l'organe de commande et permettant de définir les aux moins deux plages de positions forment des cônes de révolution.

Cependant, tel que représenté à la figure 6, il est plus explicite de réaliser un graphique des différentes positions de l'organe de commande 23 sous la forme de surfaces disjointes, mais juxtaposées, représentatives des plages P₂, et P₂₂ de positions de l'organe.

Ainsi, tel que représentée, la surface représentative de la première plage P₂₁ présente une forme de disque de centre O et de rayon α₂₁ ou β₂₁ correspondant aux premières valeurs limites des positions de l'organe de commande 23 respectivement dans les directions d'axes α et β. De même, la surface représentative de la seconde plage P₂₂ présente une forme d'anneau circulaire de centre O et de rayon compris entre α₂₁ et α₂₂ correspondant respectivement à la première valeur limite de la première plage et à la seconde valeur limite de la seconde plage.

Bien entendu et tel que représenté à la figure 7, les premières valeurs limites α₃₁ et β₃₁ correspondant à deux directions distinctes ne sont pas nécessairement égales entre elles. Par suite la surface représentative de la première plage P₃₁ peut présenter une forme écliptique de centre O. Dans ce cas, la première valeur limite α₃₁ est inférieure à la première valeur limite β₂₁.

Au surplus, la surface représentative de la seconde plage P₃₂ présente une forme quelconque non symétrique lorsque le centre de son contour n'est pas confondu avec le centre de la surface représentative de la première plage P₃₁. Dans ce cas de figure, l'une des premières valeurs limites α₃₁ est confondue avec une seconde valeur limite β₃₂. Cependant, l'autre seconde valeur limite β₃₂ est supérieure à la première valeur limite opposée α₃₁. Par ailleurs et telle que représentée, cette seconde valeur limite β₃₂ peut être confondue avec la butée physique de l'organe de commande 23.

Tel que représenté à figure 7, le graphique des différentes positions de l'organe de commande 23 peut comporter une troisième surface disjointe de la première et de la seconde surface, cette troisième surface étant ainsi représentative dune troisième plage P₃₁ de positions de l'organe de commande 23.

Telle que représentée, et comme précédemment pour la deuxième surface, cette troisième surface est comprise entre une seconde valeur limite β₃₂ et une troisième valeur limite β₃₃ qui est dans cet exemple confondue avec une butée physique β_{B}.

Une telle surface comporte alors une forme de croissant de lune puisque qu'elle ne s'étend que dans un seul sens de la direction β et puisque les troisièmes valeurs limites α₃₃ dans la direction α sont confondues avec les secondes valeurs limites α₃₂ de la seconde plage P₃₂ de positions de l'organe de commande 23.

Par ailleurs tel que représenté à la figure 5, l'organe de commande 23 peut comporter un moyen de réglage 17 agencé au niveau de l'extrémité libre 19 de l'excroissance 18.

Un tel moyen de réglage 17 permet alors de modifier avec une grande précision la position d'ancrage de l'organe de commande. Un tel réglage s'effectue en général avec le pouce du pilote et permet une grande sensibilité de commande.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de commande (1, 11) d'un rotor (2) d'un giravion, ledit système de commande (1, 11) comportant au moins un organe de commande (3, 13, 23) apte à piloter ledit rotor (2), ledit système de commande (1, 11) comportant :
- des moyens de sélection (4) pour définir, entre deux butées physiques (α_{B}, β_{B}) correspondant aux limites de déplacement dudit organe de commande (3, 13, 23), au moins deux plages (P₁, P₁₁, P₂₁, P₃₁) et (P₂, P₁₂, P₂₂, P₃₂) disjointes de positions dudit organe de commande (3, 13, 23), une première plage (P₁, P₁₁, P₂₁, P₃₁) de positions étant définie entre au moins deux premières valeurs limites (α₁, α₁₁, α₂₁, α₃₁, β₁, β₂₁, β₃₁) autour d'une position d'effort nul (α₀, O) de l'organe de commande (3, 13, 23) et au moins une seconde plage (P₂, P₁₂, P₂₂, P₃₂) de positions étant définie entre au moins une desdites au moins deux premières valeurs limites (α₁, α₁₁, α₂₁, α₃₁, β₁, β₂₁, β₃₁) et au moins une seconde valeur limite (α₂, α₁₂, α₂₂, α₃₂, β₂, β₂₂, β₃₂),
- des moyens de commande (5) pour affecter une première loi de commande à ladite première plage (P₁, P₁₁, P₂₁, P₃₁) de positions dudit organe de commande (3, 13, 23) et une seconde loi de commande à ladite seconde plage (P₂, P₁₂, P₂₂, P₃₂) de positions dudit organe de commande (3, 13, 23), lesdites première et seconde lois de commande étant choisies distinctes l'une de l'autre.

2. Système de commande selon la revendication 1, **caractérisé en ce que** ledit système de commande (1, 11) comporte des moyens de contrôle (6) permettant d'identifier un état posé dudit giravion sur un support.

3. Système de commande selon l'une quelconque des revendications 1 à 2,
**caractérisé en ce que** ladite première loi de commande est de type linéaire en position, chaque position de l'organe de commande (3, 23) dans la première plage (P₁, P₁₁, P₂₁, P₃₁) de positions correspondant à une position d'un plan (P_{R}) dudit rotor (2).

4. Système de commande selon l'une quelconque des revendications 1 à 3,
**caractérisé en ce que** ladite seconde loi est de type linéaire en vitesse, chaque position de l'organe de commande (3, 23) dans la seconde plage (P₂, P₁₂, P₂₂, P₃₂) de positions correspondant à une vitesse d'inclinaison d'un plan (P_{R}) dudit rotor (2).

5. Système de commande selon l'une quelconque des revendications 1 à 4,
**caractérisé en ce que** ladite au moins une seconde valeur limite (α₁₂) est confondue avec une desdites deux butées physiques (α_{B}) dudit organe de commande (13).

6. Système de commande selon l'une quelconque des revendications 1 à 5,
**caractérisé en ce que** ladite seconde plage (P₂, P₂₂, P₃₂) de positions dudit organe de commande (3, 13, 23) comporte deux portions de plage, lesdites deux portions de plage étant définies chacune entre une desdites au moins deux premières valeurs limites (α₁, α₂₁, α₃₁, β₁, β₂₁, β₃₁) de la première plage (P₁, P₂₁, P₃₁) et une desdites au moins une seconde valeur limite (α₂, α₂₂, α₃₂, β₂, β₂₂, β₃₂), lesdites deux portions de ladite seconde plage (P₂, P₂₂, P₃₂) de positions étant agencées respectivement de part et d'autre de la première plage (P₁, P₂₁, P₃₁) de positions dudit organe de commande (3, 13, 23).

7. Système de commande selon l'une quelconque des revendications 1 à 6,
**caractérisé en ce que** ledit système de commande (11) comporte un moyen de réglage (17) apte à modifier une position de référence (P_{R0}) d'un plan (P_{R}) dudit rotor (2) par rapport à un plan d'entraînement (P_{E}), ladite position de référence (P_{R0}) correspondant à une inclinaison du rotor (2) lorsque ledit organe de commande (23) se trouve dans ladite position d'effort nul (O).

8. Système de commande selon l'une quelconque des revendications 1 à 7,
**caractérisé en ce que** ledit organe de commande (13, 23) comporte une excroissance (8, 18) de longueur inférieure à 30cm entre une extrémité libre (9, 19) de ladite excroissance (8, 18) et une articulation (10,20) conférant à ladite excroissance (8, 18) au moins un degré de liberté en rotation par rapport à un socle (16, 26).

9. Système de commande selon la revendication 8,
**caractérisé en ce que** ladite articulation (20) confère à ladite excroissance (18) deux degrés de liberté en rotation par rapport audit socle (26) et **en ce que** lesdites au moins deux plages disjointes (P₂₁, P₃₁) et (P_{22,} P₃₂) de positions décrites par ladite excroissance (18) sont de forme conique avec des angles différents, lesdites au moins deux premières valeurs limites (α₂₁, α₃₁, β₂₁, β₃₁) formant un angle d'un premier cône formant la première plage (P₂₁, P₃₁) et ladite au moins une seconde valeur limite (α₂₂, α₃₂, β₂₂, β₃₂) formant un angle extérieur d'un second cône creux formant la seconde plage (P₂₂, P₃₂).

10. Giravion **caractérisé en ce qu'**il comporte un système de commande (1, 11) selon l'une quelconque des revendications 1 à 9.

11. Méthode de commande d'un rotor (2) d'un giravion par un organe de commande (3, 13, 23),
**caractérisée en ce que** ladite méthode comporte des étapes consistant à :
- définir au moins deux plages (P₁, P₁₁, P₂₁, P₃₁) et (P₂, P₁₂, P₂₂, P₃₂) distinctes de positions dudit organe de commande (3, 13, 23), une première plage (P₁, P₁₁, P₂₁, P₃₁) de positions étant définie entre deux premières valeurs limites (α₁, α₁₁, α_{21,} α₃₁, β₁, β₂₁, β₃₁) autour d'une position d'effort nul (α₀, O) de l'organe de commande (3, 13, 23) et une seconde plage (P₂, P₁₂, P₂₂, P₃₂) de positions étant définie entre au moins une desdites deux premières valeurs limites (α₁, α₁₁, α₂₁, α₃₁, β₁, β₂₁, β₃₁) et au moins une seconde valeur limite (α₂, α₁₂, α₂₂, α₃₂, β₂, β₂₂, β₃₂),
- affecter une première loi de commande à ladite première plage (P₁, P₁₁, P₂₁, P₃₁) de positions dudit organe de commande (3, 13, 23) et une seconde loi de commande à ladite seconde plage (P₂, P₁₂, P₂₂, P₃₂) de positions dudit organe de commande (3, 13, 23), lesdites première et seconde lois de commande étant choisies distinctes l'une de l'autre.

12. Méthode selon la revendication 11,
**caractérisée en ce qu'**elle comporte une étape consistant à identifier un état posé dudit giravion sur un support.

13. Méthode selon l'une quelconque des revendications 11 à 12,
**caractérisée en ce que** ladite première loi de commande étant de type linéaire en position, à chaque position de l'organe de commande (3, 23) dans la première plage (P₁, P₁₁, P₂₁, P₃₁) de positions on fait correspondre une position d'un plan (P_{R}) dudit rotor (2).

14. Méthode selon l'une quelconque des revendications 11 à 13,
**caractérisée en ce que** ladite seconde loi étant de type linéaire en vitesse, à chaque position de l'organe de commande (3, 23) dans la seconde plage (P₂, P₁₂, P₂₂, P₃₂) de positions on fait correspondre une vitesse d'inclinaison d'un plan (P_{R}) dudit rotor (2).

15. Méthode selon l'une quelconque des revendications 11 à 14,
**caractérisée en ce qu'**on choisit ladite au moins une seconde valeur limite (α₁₂) de manière à ce qu'elle soit confondue avec une butée physique (α_{B}) dudit organe de commande (13).

16. Méthode selon l'une quelconque des revendications 11 à 15,
**caractérisée en ce qu'**on définit deux secondes valeurs limites (α₂, α₂₂, α₃₂, β₂, β₂₂, β₃₂) pour la seconde plage (P₂, P₂₂, P₃₂) de positions dudit organe de commande (3, 13, 23) et **en ce que** ladite seconde plage (P₂, P₂₂, P₃₂) de positions dudit organe de commande (3, 13, 23) est formée par deux portions de plage, lesdites deux portions de plage étant agencées respectivement de part et d'autre de la première plage (P₁, P₂₁, P₃₁) de positions dudit organe de commande (3, 13, 23).

## Patentansprüche

1. System (1, 11) zur Steuerung eines Rotors (2) eines Drehflügelflugzeugs, wobei das Steuersystem (1, 11) mindestens ein Steuerelement (3, 13, 23) aufweist, das den Rotor (2) steuern kann, wobei das Steuersystem (1, 11) aufweist:
- Auswahlmittel (4) zum Definieren mindestens zweier getrennter Positionsbereiche (P₁, P₁₁, P₂₁, P₃₁) und (P₂, P₁₂, P₂₂, P₃₂) des Steuerelements (3, 13, 23) zwischen zwei physischen Anschlägen (α_{B}, β_{B}), die den Bewegungsgrenzen des Steuerelements (3, 13, 23) entsprechen, wobei ein erster Bereich (P₁, P₁₁, P₂₁, P₃₁) von Positionen definiert ist zwischen mindestens zwei ersten Grenzwerten (α₁, α₁₁, α₂₁, α₃₁, β₁, β₂₁, β₃₁) um eine Position einer Beanspruchung gleich Null (α₀, O) des Steuerelements (3, 13, 23) herum, und mindestens ein zweiter Bereich (P₂, P₁₂, P₂₂, P₃₂) von Positionen definiert ist zwischen mindestens einem der mindestens zwei ersten Grenzwerte (α₁, α₁₁, α₂₁, α₃₁, β₁, β₂₁, β₃₁) und mindestens einem zweiten Grenzwert (α₂, α₁₂, α₂₂*,* α₃₂*,* β₂, β₂₂, β₃₂),
- Steuermittel (5), um eine erste Steuerregel auf den ersten Bereich (P₁, P₁₁, P₂₁, P₃₁) der Positionen des Steuerelements (3, 13, 23) anzuwenden und eine zweite Steuerregel auf den zweiten Bereich (P₂, P₁₂, P₂₂, P₃₂) von Positionen des Steuerelements (3, 13, 23) anzuwenden, wobei die ersten und zweiten Steuerregeln verschieden voneinander gewählt sind.

2. Steuersystem nach Anspruch 1,
**dadurch gekennzeichnet, dass** das Steuersystem (1, 11) Kontrollmittel (6) aufweist, die es erlauben, einen Zustand des Drehflügelflugzeugs, wenn es auf einen Träger aufgesetzt ist, zu identifizieren.

3. Steuersystem nach einem der Ansprüche 1 bis 2,
**dadurch gekennzeichnet, dass** die erste Steuerregel vom linearen Typ bezüglich der Position ist, wobei jede Position des Steuerelements (3, 23) in dem ersten Bereich (P₁, P₁₁, P₂₁, P₃₁) von Positionen einer Position einer Ebene (P_{R}) des Rotors (2) entspricht.

4. Steuersystem nach einem der Ansprüche 1 bis 3,
**dadurch gekennzeichnet, dass** die zweite Regel vom linearen Typ bezüglich der Geschwindigkeit ist, wobei jede Position des Steuerelements (3, 23) in dem zweiten Bereich (P₂, P₁₂, P₂₂, P₃₂) von Positionen einer Neigungsgeschwindigkeit einer Ebene (P_{R}) des Rotors (2) entspricht.

5. Steuersystem nach einem der Ansprüche 1 bis 4,
**dadurch gekennzeichnet, dass** der mindestens eine zweite Grenzwert (α₁₂) gleich einem der zwei physischen Anschläge (α_{B}) des Steuerelements (13) ist.

6. Steuersystem nach einem der Ansprüche 1 bis 5,
**dadurch gekennzeichnet, dass** der zweite Bereich (P₂, P₂₂, P₃₂) von Positionen des Steuerelements (3, 13, 23) zwei Bereichsabschnitte aufweist, wobei die zwei Bereichsabschnitte jeweils definiert sind zwischen einem der mindestens zwei ersten Grenzwerte (α₁, α₂₁, α₃₁, β₁, β₂₁, β₃₁) des ersten Bereichs (P₁, P₂₁, P₃₁) und dem mindestens einen zweiten Grenzwert (α₂, α₂₂, α₃₂, β₂, β₂₂, β₃₂), wobei die zwei Abschnitte des zweiten Bereichs (P₂, P₂₂, P₃₂) von Positionen jeweils auf gegenüberliegenden Seiten des ersten Bereichs (P₁, P₂₁, P₃₁) von Positionen des Steuerelement (3, 13, 23) angeordnet sind.

7. Steuersystem nach einem der Ansprüche 1 bis 6,
**dadurch gekennzeichnet, dass** das Steuersystem (11) ein Regelungsmittel (17) aufweist, das eine Bezugsposition (P_{R0}) einer Ebene (P_{R}) des Rotors (2) bezüglich einer Antriebsebene (P_{E}) ändern kann, wobei die Bezugsposition (P_{R0}) einer Neigung des Rotors (2) entspricht, wenn das Steuerelement (23) sich in der Position mit einer Beanspruchung Null (O) befindet.

8. Steuersystem nach einem der Ansprüche 1 bis 7,
**dadurch gekennzeichnet, dass** das Steuerelement (13, 23) eine Erhebung (8, 18) mit einer Länge kleiner als 30 cm zwischen einem freien Ende (9, 19) der Erhebung (8, 18) und einem Gelenk (10, 20) aufweist, das der Erhebung (8, 18) mindestens einen Rotationsfreiheitsgrad relativ zu einem Sockel (16, 26) verleiht.

9. Steuersystem nach Anspruch 8,
**dadurch gekennzeichnet, dass** das Gelenk (20) der Erhebung (18) zwei Rotationsfreiheitsgrade relativ zu dem Sockel (26) verleiht, und dadurch, dass die mindestens zwei getrennten Bereiche (P₂₁, P₃₁) und (P₂₂, P₃₂) von Positionen, die durch die Erhebung (18) beschrieben werden, eine konische Form mit verschiedenen Winkeln aufweisen, wobei die mindestens zwei ersten Grenzwerte (α₂₁, α₃₁, β₂₁, β₃₁) einen Winkel eines ersten Konus bilden, der den ersten Bereich (P₂₁, P₃₁) bildet, und der mindestens eine zweite Grenzwert (α₂₂, α₃₂, β₂₂, β₃₂) einen äußeren Winkel eines zweiten hohlen Konus bildet, der den zweiten Bereich (P₂₂, P₃₂) bildet.

10. Luftfahrzeug, **dadurch gekennzeichnet, dass** es ein Steuersystem (1, 11) gemäß einem der Ansprüche 1 bis 9 aufweist.

11. Verfahren zum Steuern eines Rotors (2) eines Drehflügelflugzeugs durch ein Steuerelement (3, 13, 23),
**dadurch gekennzeichnet, dass** das Verfahren Schritte aufweist, die darin bestehen:
- mindestens zwei unterschiedliche Bereiche (P₁, P₁₁, P₂₁, P₃₁) und (P₂, P₁₂, P₂₂, P₃₂) von Positionen des Steuerelements (3, 13, 23) zu definieren, einen ersten Bereich (P₁, P₁₁, P₂₁, P₃₁) von Positionen, der definiert ist zwischen zwei ersten Grenzwerten (α₁, α₁₁, α₂₁, α₃₁, β₁, β₂₁, β₃₁) um eine Position einer Beanspruchung gleich Null (α₀, O) des Steuerelements (3, 13, 23) herum, und einen zweiten Bereich (P₂, P₁₂, P₂₂, P₃₂) von Positionen, der definiert ist zwischen mindestens einem der beiden ersten Grenzwerte (α₁, α₁₁, α₂₁, α₃₁, β₁, β₂₁, β₃₁) und mindestens einem zweiten Grenzwert (α₂, α₁₂, α₂₂, α₃₂, β₂, β₂₂, β₃₂),
- eine erste Steuerregel auf den ersten Bereich (P₁, P₁₁, P₂₁, P₃₁) von Positionen des Steuerelements (3, 13, 23) anzuwenden und eine zweite Steuerregel auf den zweiten Bereich (P₂, P₁₂, P₂₂, P₃₂) von Positionen des Steuerelements (3, 13, 23) anzuwenden, wobei die ersten und die zweiten Steuerregeln verschieden voneinander gewählt sind.

12. Verfahren nach Anspruch 11,
**dadurch gekennzeichnet, dass** es einen Schritt aufweist, der darin besteht, einen Zustand des Drehflügelflugzeugs, wenn es auf einen Träger aufgesetzt ist, zu identifizieren.

13. Verfahren nach einem der Ansprüche 11 bis 12,
**dadurch gekennzeichnet, dass** die erste Steuerregel vom linearen Typ bezüglich der Position ist, wobei eine Position einer Ebene (P_{R}) des Rotors (2) korrespondierend gemacht wird zu jeder Position des Steuerelements (3, 23) in dem ersten Bereich (P₁, P₁₁, P₂₁, P₃₁) von Positionen.

14. Verfahren nach einem der Ansprüche 11 bis 13,
**dadurch gekennzeichnet, dass** die zweite Regel vom linearen Typ bezüglich der Geschwindigkeit ist, wobei eine Neigungsgeschwindigkeit einer Ebene (P_{R}) des Rotors (2) korrespondierend gemacht wird zu jeder Position des Steuerelements (3, 23) in dem zweiten Bereich (P₂, P₁₂, P₂₂, P₃₂) von Positionen.

15. Verfahren nach einem der Ansprüche 11 bis 14,
**dadurch gekennzeichnet, dass** man den mindestens einen zweiten Grenzwert (α₁₂) so auswählt, dass er einem physischen Anschlag (α_{B}) des Steuerelements (13) entspricht.

16. Verfahren nach einem der Ansprüche 11 bis 15,
**dadurch gekennzeichnet, dass** die beiden zweiten Grenzwerte (α₂, α₂₂, α₃₂, β₂, β₂₂, β₃₂) für den zweiten Bereich (P₂, P₂₂, P₃₂) von Positionen des Steuerelements (3, 13 23) definiert werden, und dadurch, dass der zweite Bereich (P₂, P₂₂, P₃₂) von Positionen des Steuerelements (3, 13, 23) durch zwei Abschnitte des Bereichs gebildet wird, wobei die beiden Abschnitte des Bereichs jeweils auf gegenüberliegenden Seiten des ersten Bereichs (P₁, P₂₁, P₃₁) von Positionen des Steuerelements (3, 13, 23) angeordnet sind.

## Claims

1. Control system (1, 11) for controlling a rotorcraft rotor (2), said control system (1, 11) comprising at least one control member (3, 13, 23) suitable for piloting said rotor (2),
said control system (1, 11) comprising:
- selection means (4) for defining, between two physical abutments (α_{B}, β_{B}) corresponding to the movement limits of said control member (3, 13, 23), at least two disjoint position ranges (P₁, P₁₁, P₂₁, P₃₁) and (P₂, P₁₂, P₂₂, P₃₂) of said control member (3, 13, 23), a first position range (P₁, P₁₁, P₂₁, P₃₁) being defined between at least two first limit values (α₁, α₁₁, α₂₁, α₃₁, β₁, β₂₁, β₃₁) about a zero force position (α₀, 0) of the control member (3, 13, 23) and at least one second position range (P₂, P₁₂, P₂₂, P₃₂) being defined between at least one of said at least two first limit values (α₁, α₁₁, α₂₁, α₃₁, β₁, β₂₁, β₃₁) and at least one second limit value (α₂, α₁₂, α₂₂, α_{32,} β₂, β₂₂, β₃₂),
- control means (5) for allocating a first control law to said first position range (P₁, P₁₁, P₂₁, P₃₁) of said control member (3, 13, 23) and a second control law to said second position range (P₂, P₁₂, P₂₂, P₃₂) of said control member (3, 13, 23), said first and second control laws being selected to be distinct from one another.

2. Control system according to claim 1,
**characterised in that** said control system (1, 11) comprises monitoring means (6) allowing identification of a landed state of said rotorcraft on a support.

3. Control system according to any one of claims 1 to 2,
**characterised in that** said first control law is of the type linear in position, each position of the control member (3, 23) in the first position range (P₁, P₁₁, P₂₁, P₃₁) corresponding to a position of a plane (P_{R}) of said rotor (2).

4. Control system according to any one of claims 1 to 3,
**characterised in that** said second law is of the type linear in speed, each position of the control member (3, 23) in the second position range (P₂, P₁₂, P₂₂, P₃₂) corresponding to a speed of inclination of a plane (P_{R}) of said rotor (2).

5. Control system according to any one of claims 1 to 4,
**characterised in that** said at least one second limit value (α₁₂) coincides with one of said two physical abutments (α_{B}) of said control member (13).

6. Control system according to any one of claims 1 to 5,
**characterised in that** said second position range (P₂, P₂₂, P₃₂) of said control member (3, 13, 23) comprises two range portions, said two range portions each being defined between one of said at least two first limit values (α₁, α₂₁, α₃₁, β₁, β₂₁, β₃₁) of the first range (P₁, P₂₁, P₃₁) and one of said at least one second limit value (α₂, α₂₂, α₃₂, β₂, β₂₂, β₃₂), said two portions of said second position range (P₂, P₂₂, P₃₂) being arranged respectively on one side and on the other side of the first position range (P₁, P₂₁, P₃₁) of said control member (3, 13, 23).

7. Control system according to any one of claims 1 to 6,
**characterised in that** said control system (11) comprises an adjustment means (17) suitable for modifying a reference position (P_{R0}) of a plane (P_{R}) of said rotor (2) relative to a drive plane (P_{E}), said reference position (P_{R0}) corresponding to an inclination of the rotor (2) when said control member (23) is in said zero force position (0).

8. Control system according to any one of claims 1 to 7,
**characterised in that** said control member (13, 23) comprises a projection (8, 18) of length less than 30 cm between a free end (9, 19) of said projection (8, 18) and an articulation (10,20) imparting to said projection (8, 18) at least one degree of freedom in rotation relative to a stand (16, 26).

9. Control system according to claim 8,
**characterised in that** said articulation (20) imparts to said projection (18) two degrees of freedom in rotation relative to said stand (26) and **in that** said at least two disjoint position ranges (P₂₁, P₃₁) and (P₂₂, P₃₂) described by said projection (18) are of conical shape with different angles, said at least two first limit values (α₂₁, α₃₁, β₂₁, β₃₁) forming an angle of a first cone forming the first range (P₂₁, P₃₁) and said at least one second limit value (α₂₂, α₃₂, β₂₂, β₃₂) forming an exterior angle of a hollow second cone forming the second range (P₂₂, P₃₂).

10. Rotorcraft **characterised in that** it comprises a control system (1, 11) according to any one of claims 1 to 9.

11. Method for controlling a rotorcraft rotor (2) by a control member (3, 13, 23),
**characterised in that** said method comprises steps consisting in:
- defining at least two distinct position ranges (P₁, P₁₁, P₂₁, P₃₁) and (P₂, P₁₂, P₂₂, P₃₂) of said control member (3, 13, 23), a first position range (P₁, P₁₁, P₂₁, P₃₁) being defined between two first limit values (α₁, α₁₁, α₂₁, α₃₁, β₁, β₂₁, β₃₁) about a zero force position (α₀, 0) of the control member (3, 13, 23) and a second position range (P₂, P₁₂, P₂₂, P₃₂) being defined between at least one of said two first limit values (α₁, α₁₁, α₂₁, α₃₁, β₁, β₂₁, β₃₁) and at least one second limit value (α₂, α₁₂, α₂₂, α₃₂, β₂, β₂₂, β₃₂),
- allocating a first control law to said first position range (P₁, P₁₁, P₂₁, P₃₁) of said control member (3, 13, 23) and a second control law to said second position range (P₂, P₁₂, P₂₂, P₃₂) of said control member (3, 13, 23), said first and second control laws being selected to be distinct from one another.

12. Method according to claim 11,
**characterised in that** it comprises a step consisting in identifying a landed state of said rotorcraft on a support.

13. Method according to any one of claims 11 to 12,
**characterised in that** said first control law being of the type linear in position, to each position of the control member (3, 23) in the first position range (P₁, P₁₁, P₂₁, P₃₁) there is made to correspond a position of a plane (P_{R}) of said rotor (2).

14. Method according to any one of claims 11 to 13,
**characterised in that** said second law being of the type linear in speed, to each position of the control member (3, 23) in the second position range (P₂, P₁₂, P₂₂, P₃₂) there is made to correspond a speed of inclination of a plane (P_{R}) of said rotor (2).

15. Method according to one of claims 11 to 14,
**characterised in that** said at least one second limit value (α₁₂) is selected in such a manner that it coincides with a physical abutment (α_{B}) of said control member (13).

16. Method according to any one of claims 11 to 15,
**characterised in that** two second limit values (α₂, α₂₂, α₃₂, β₂, β₂₂, β₃₂) are defined for the second position range (P₂, P₂₂, P₃₂) of said control member (3, 13, 23) and **in that** said second position range (P₂, P₂₂, P₃₂) of said control member (3, 13, 23) is formed by two range portions, said two range portions being arranged respectively on one side and on the other side of the first position range (P₁, P₂₁, P₃₁) of said control member (3, 13, 23).
